# FASCICULE DE BREVET EUROPEEN

(11) **EP 1 112 011 B1**
(45) Date de publication et mention de la délivrance du brevet: **11.06.2003**
(21) Numéro de dépôt: 99941722.3
(22) Date de dépôt: 08.09.1999
(51) Int. Cl.: A47J 37/06, F23D 14/06, F24C 15/10

(54) **APPAREIL A GAZ POUR LE CHAUFFAGE ET/OU LA CUISSON D'ALIMENTS**
GASBEHEIZTES GERÄT ZUM ERWÄRMEN ODER GAREN VON LEBENSMITTELN
GAS APPARATUS FOR HEATING AND/OR COOKING FOOD

(30) Priorité: 08.09.1998 FR 9811387
(43) Date de publication de la demande: 04.07.2001
(73) Titulaire: KRAMPOUZ, 29700 Pluguffan (FR)
(72) Inventeur: BOSSER, Michel, F-29710 Pouldreuzic (FR)
(74) Mandataire: Branger, Jean-Yves
(86) Numéro de dépôt international: FR9902139
(87) Numéro de publication internationale: WO00013562

(56) Documents cités:
- WO-A-99/20942
- AU-A- 2 841 384
- US-A- 4 108 142
- US-A- 4 264 298
- US-A- 5 865 100
- PATENT ABSTRACTS OF JAPAN vol. 98, no. 11, 30 septembre 1998 (1998-09-30) & JP 10 165313 A (CHUBU CORP KK), 23 juin 1998 (1998-06-23)

## Description

La présente invention se rapporte à un appareil à gaz pour le chauffage et/ou la cuisson d'aliments.

De manière traditionnelle, lorsque l'on souhaite faire chauffer et/ou cuire des aliments déposés sur ou dedans un élément de réception tel qu'une plaque de grill ou un récipient, on place cet élément au-dessus d'un brûleur et, plus précisément, sur une série de pattes de support qui s'étendent horizontalement au-dessus et à proximité immédiate du brûleur.

Dans certains modes de réalisation, le récipient repose directement sur le brûleur.

Ainsi, on décrit dans le document US-A-4 264 298 un brûleur à gaz dont le chapeau est élargi pour former une tête plane ressemblant à une plaque de cuisson. Les flammes se forment à la périphérie d'une chambre centrale de dimension réduite. La combustion a lieu hors de cette chambre et les flammes viennent lécher la sous-face de la tête. Pour ce faire, les flammes ont une taille importante, ce qui se traduit par de fortes déperditions de chaleur en bout de flamme, au profit d'une luminosité élevée, mais inutile.

En tout état de cause, un tel agencement ne permet pas de chauffer uniformément la plaque, surtout lorsque celle-ci est de grande dimension.

Au surplus, la plaque est prévue pour recevoir un récipient de cuisson.

Malgré la proximité de la flamme et de ce récipient, l'énergie n'est pas intégralement transmise à ce dernier. On constate des déperditions de chaleur supplémentaires entre la flamme et l'intérieur du récipient.

Lorsque l'élément de réception présente une surface importante à chauffer, comme c'est le cas d'une plaque de crêpière, la structure des brûleurs connus est beaucoup plus complexe.

Ainsi, on connaît des brûleurs pour crêpière qui comprennent une série de tubes parallèles et horizontaux dans lesquels circulent un mélange gaz/air, percés de trous pour l'échappement des flammes de combustion.

D'autres comportent un fût central de réception d'un mélange gaz/air qui communique avec un ensemble de branches réparties en étoile, perpendiculairement au fût. De multiples trous sont prévus dans lesdites branches.

Dans ces deux réalisations, la plaque de crêpière est rapportée au-dessus du brûleur ce qui, comme dans le cas précédent, occasionne de fortes déperditions de chaleur, entre le brûleur et l'élément de support ou de réception de l'aliment.

De plus, de tels brûleurs sont compliqués à fabriquer et leur prix de revient est élevé.

La présente invention a pour but de remédier aux inconvénients que présentent ces dispositifs connus.

En d'autres termes, elle vise à fournir un appareil à gaz dont les déperditions de chaleur sont réduites et qui permet de réaliser un chauffage et/ou une cuisson uniforme des aliments, même lorsqu'ils sont déposés sur un support de grandes dimensions.

Elle vise également à atteindre les objectifs précités avec un appareil dont la structure est simple et le prix de revient réduit.

L'invention concerne donc un appareil à gaz pour le chauffage et/ou la cuisson d'aliments, qui se caractérise essentiellement par le fait qu'il comporte un boîtier comprenant un corps inférieur dans lequel est reçu un mélange gaz/air à brûler, et une coiffe supérieure en forme de plaque destinée à venir reposer sur ledit corps, des orifices étant prévus dans ce boîtier pour l'échappement et la combustion dudit mélange gaz/air, que la face supérieure de ladite plaque constitue une surface de réception des aliments à chauffer et/ou à cuire et que le boîtier présente un contour sinueux avec des branches radiales, agencées de telle manière que l'échappement et la combustion dudit mélange gaz/air se fasse dans des régions centrales, périphériques et radiales de la sous-face de la coiffe.

Ainsi, la surface de réception des aliments est en contact direct avec la flamme, de sorte que les déperditions de chaleur sont réduites.

De plus, un seul boîtier suffit pour alimenter l'ensemble de l'appareil en mélange gaz/air.

Par ailleurs, du fait que l'élément de réception des aliments forme une même pièce avec la coiffe, le prix de revient de l'ensemble est avantageux et sa fabrication est relativement simple à réaliser.

Enfin, du fait du contour sinueux du boîtier, les flammes se répartissent uniformément sur une grande partie de la sous-face de la coiffe. Elles peuvent donc être de taille réduite, ce qui favorise leur rendement énergétique.

Selon des caractéristiques avantageuses mais non limitatives de l'invention :
- de la sous-face de la coiffe fait saillie une paroi à contour fermé et sinueux, qui prend appui sur un muret de même contour que présente le corps inférieur, cette paroi et ce muret délimitant latéralement ledit boîtier ;
- la sous-face de ladite coiffe prend appui directement sur un muret à contour fermé et sinueux que présente le corps inférieur ;
- la plaque est une plaque de crêpière ;
- la plaque est une plaque de grill, nervurée ou non ;
- lesdits orifices d'échappement s'étendent à proximité du plan de jonction du corps inférieur et de ladite coiffe ;
- lesdits orifices consistent en une série de créneaux formés dans le bord supérieur dudit muret, dont l'ouverture supérieure est obturée par ladite coiffe ;
- lesdits orifices consistent en une série de créneaux formés dans le bord inférieur de ladite paroi, ou dans le corps de celle-ci ;
- lesdits orifices consistent en une série de créneaux formés dans une pièce intermédiaire, apte à s'intercaler entre ladite paroi et ledit muret ;
- le contour dudit boîtier présente une forme semblable à celle d'une étoile.

D'autres caractéristiques de l'invention apparaîtront à la lecture de la description qui va suivre de certains modes de réalisation. Cette description sera faite en liaison avec les figures annexées dans lesquelles :
- la figure 1 est une vue de la section droite d'un premier appareil conforme à la présente invention ;
- la figure 2 est une vue de dessous de la coiffe équipant l'appareil de la figure 1, sur laquelle on a fait figurer le plan de coupe I-I de cette première figure ;
- la figure 3 est une vue de détail d'une partie du corps et de la coiffe de l'appareil de la figure 1, destinée à illustrer la forme et la répartition d'orifices d'échappement du mélange gaz/air ;
- la figure 4 est également une vue de détail d'une partie du corps et de la coiffe de l'appareil, selon un plan de coupe vertical, montrant la présence de plots de centrage ;
- la figure 5 est encore une vue de détail, selon un plan de coupe vertical de la coiffe, dans une région où elle est appelée à recevoir une vis de fixation ;
- la figure 6 est une vue de dessous de la coiffe équipant un appareil selon l'invention, conformément à un second mode de réalisation ;
- la figure 7 est une vue de dessous d'une platine de transfert du mélange gaz/air, destinée à coopérer avec la coiffe de la figure 6 ;
- la figure 8 est une vue de côté éclatée d'un appareil équipé de la coiffe de la figure 6 et de platines de transfert telles que celle de la figure 7 ;
- la figure 9 est une vue de côté de l'appareil de la figure 8, après assemblage des différents éléments qui le constituent.

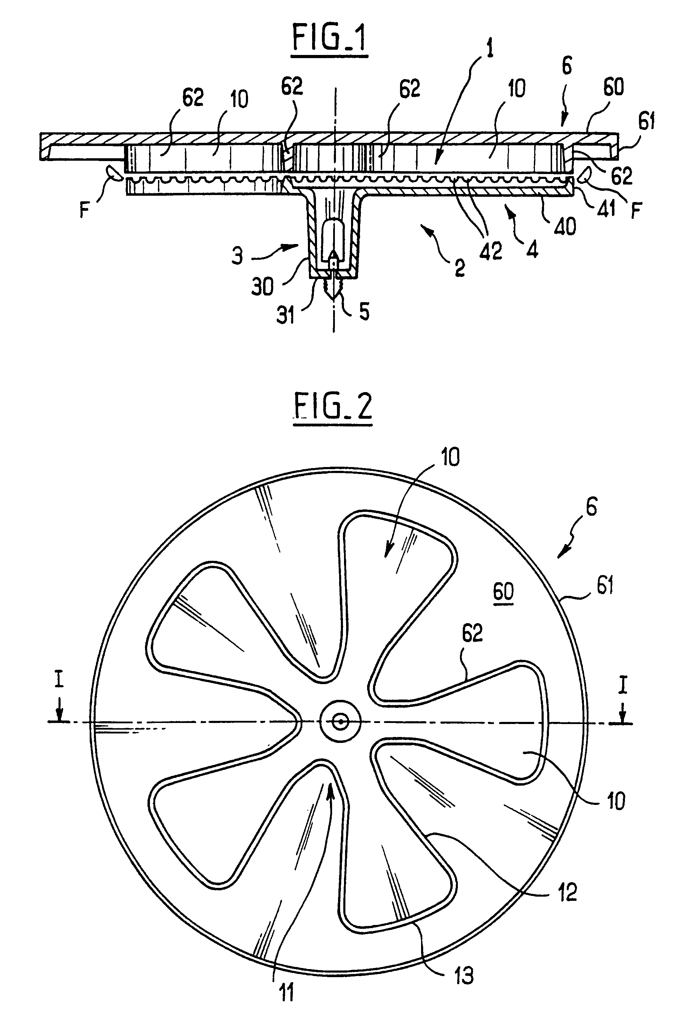

L'appareil à gaz représenté à la figure 1 comporte un boîtier 1 avec un corps inférieur 2 dans lequel est reçu le mélange gaz/air à brûler et une coiffe supérieure 6 en forme de plaque, venant reposer sur ce corps.

Le corps 2 est une pièce métallique, par exemple en aluminium, qui est moulée sous pression. Dans une variante, il peut s'agir d'une pièce réalisée par emboutissage de tôle.

Il comprend un puits central et axial 3.

Ce puits consiste en une pièce cylindrique, avec une paroi 30 généralement verticale et un fond 31. Le fond 31 est traversé par un injecteur de gaz 5 dont la tête de distribution débouche axialement dans le puits.

La paroi 30 est quant à elle percée d'une ouverture d'admission d'air 32.

Le puits 3 se prolonge vers le haut par un plateau 40 qui s'étend horizontalement, sensiblement parallèlement au fond du puits 31.

Le plateau 40 est bordé par un muret formant collerette périphérique 41, qui fait saillie, perpendiculairement vers le haut, à l'opposé du puits 3.

Le plateau 40 et la collerette 41 définissent ensemble la partie inférieure d'une chambre de circulation 4 du mélange gaz/air admis dans le puits.

Nous reviendrons plus loin dans la description sur la forme particulière de cette collerette qui participe à la délimitation latérale du boîtier.

Le long du bord supérieur de la collerette 41 sont prévues une série d'ouvertures formant des créneaux en "U" 42, régulièrement espacés les uns les autres. Ces créneaux constituent autant d'orifices pour l'échappement et la combustion du mélange gaz/air admis dans la chambre 4.

Dans une forme de réalisation non représentée, ces créneaux ne sont pas régulièrement espacés, et leur taille respective peut varier. En tout état de cause, on peut envisager toute répartition de ces créneaux favorable à une bonne tenue des flammes.

Bien entendu, ces orifices ne sont pas forcément prévus en partie supérieure de la collerette. Ils pourraient être répartis dans le corps de celle-ci, à un niveau inférieur, c'est à dire sans déboucher sur son bord supérieur libre.

Selon l'invention, le boîtier 1 comprend une coiffe supérieure 6 en forme de plaque, destinée à venir reposer sur le corps 2.

Dans l'exemple représenté ici, il s'agit d'une plaque de crêpière, c'est à dire une plaque métallique circulaire 60, sur la face supérieure de laquelle l'aliment à cuire peut être déposé.

Par l'expression "crêpière", on entend non seulement l'appareil destiné à la confection de crêpes et de galettes, mais également celui permettant de faire cuire une pâte liquide épaisse, du genre "blinis".

La sous-face de la plaque comporte une collerette périphérique circulaire rigidificatrice 61 qui s'étend perpendiculairement vers le bas sur une faible hauteur.

A partir de cette sous-face s'étend également une paroi 62 à contour fermé, de hauteur plus importante. La hauteur de la paroi est par exemple de l'ordre de 25 à 35 mm.

La forme sinueuse de cette paroi rappelle celle d'une étoile. La collerette 41 décrite plus haut présente strictement la même forme.

Comme le montre la figure 1, la paroi 62 est destinée à venir en appui sur le muret ou collerette 41. Elle constitue, avec la partie de plaque 60 qu'elle délimite, la partie supérieure de la chambre 4 précitée.

C'est à la périphérie de cette chambre que se répartissent les flammes **F**, comme le montre la figure 1.

Les créneaux 42 décrits plus haut peuvent être, selon un mode de réalisation différent, réalisés dans le bord inférieur de la paroi 62 ou dans le corps de celle-ci.

Le fait que la coiffe 6 du boîtier fasse partie intégrante de l'élément de réception des aliments à cuire assure une meilleure répartition de la chaleur, sans réelle déperdition de celle-ci.

La coiffe 6, avec sa plaque 60 et sa paroi 62 délimite, avec le corps 2 et sa collerette 41, le boîtier 1 de l'appareil.

Du fait de la forme particulière des parois 62 et collerette 41, ce boîtier présente un contour sinueux, avec des branches radiales 10.

Ces branches sont agencées de manière que l'échappement et la combustion du mélange gaz/air sous forme de flammes, se fasse dans des régions centrales 11, périphériques 13 et radiales 12, de la sous-face de la coiffe 6.

Par l'expression "régions centrales", on entend des zones de la coiffe 6 proches de son centre géométrique. Par "régions périphériques", on entend des zones proches de son rebord périphérique. Enfin, par "régions radiales", on entend des zones qui sont généralement dirigées du centre géométrique de la coiffe en direction de son rebord périphérique. Bien entendu, ces définitions sont valables même si la plaque s'inscrit non pas dans un cercle, mais dans une autre forme géométrique, telle qu'un carré.

C'est cette forme particulière du boîtier qui va permettre de répartir les flammes de combustion sur la majeure partie de la surface de la coiffe 6, ceci en ne faisant usage que d'un seul et unique injecteur de gaz 5.

La plaque 60 est de préférence en fonte, avec une épaisseur de l'ordre de 8 à 10 mm. Toutefois, elle pourrait être prévue en verre ou en tout autre matériau résistant à la chaleur.

A titre indicatif, le diamètre d'une telle plaque est généralement compris entre 300 et 500 mm.

Dans une forme de réalisation non représentée, la coiffe 6 peut être dépourvue de paroi 62. Dans ce cas, elle porte directement par sa sous-face sur la collerette 41.

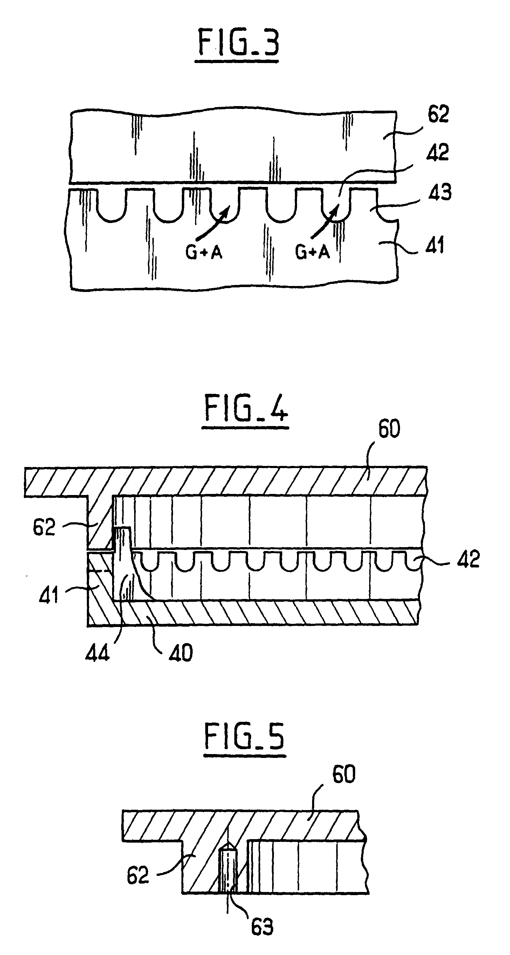

La figure 3 est simplement destinée à illustrer l'échappement du mélange gaz/air "G+A" par les créneaux 42 que présente la collerette 41 du corps inférieur 2.

Des plots de centrage peuvent être prévus au niveau de ce corps inférieur pour faciliter la mise en place de la coiffe.

Un tel plot 44 a été représenté à la figure 4. Il borde la face interne de la collerette 41 et s'étend largement au-dessus de celle-ci. Ainsi, lors de la mise en place de la coiffe, la face interne de la paroi 62 vient buter contre le plot 44.

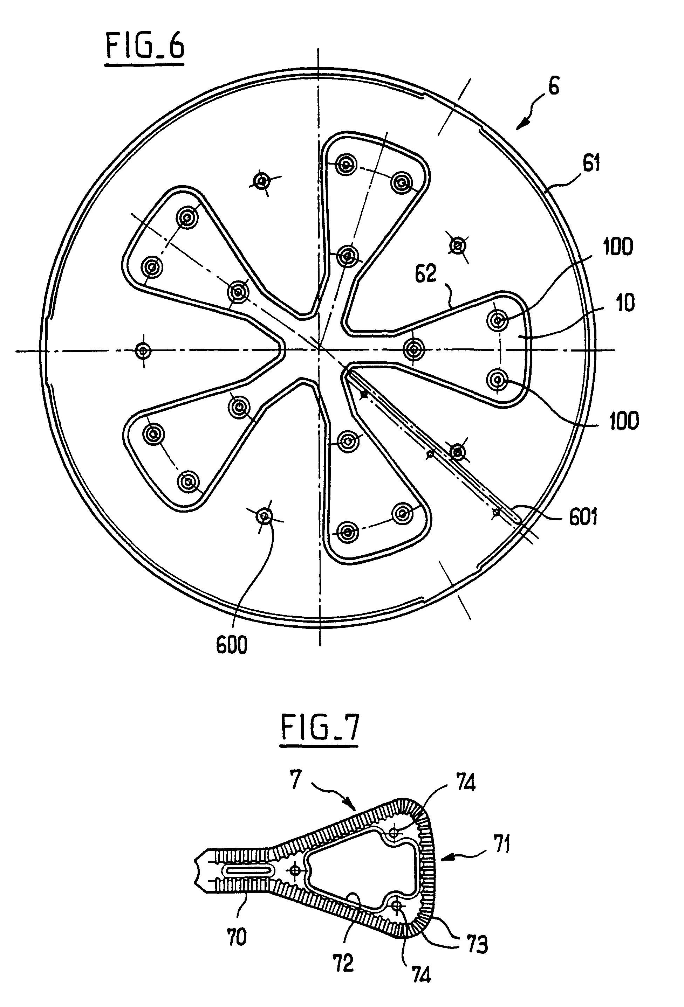

En plus de ces plots, il peut être prévu des vis de fixation des deux parties du boîtier. Pour ce faire et en référence à la figure 5, la paroi 62 précitée peut comporter des zones de plus forte épaisseur dans lesquels sont prévus des orifices 63 de réception d'une vis autotaraudeuse.

On notera que ces moyens de fixation ont un caractère purement facultatif. En effet, il peut être intéressant de prévoir une coiffe amovible par un simple mouvement de retrait vers le haut, par exemple en vue de faciliter son nettoyage ou de la remplacer par une autre coiffe.

Tout en conservant les avantages déjà indiqués, le boîtier servant à répartir le gaz en sous-face de la plaque peut être obtenu par différentes techniques utilisées couramment dans l'industrie.

Dans le mode de réalisation de la figure 6, la coiffe 6 présente sensiblement la même structure que celle de la figure 2.

Elle est réalisée en fonte et présente cinq branches radiales 10 réparties en étoile et délimitées par une paroi 62.

Le nombre de branches peut, dans des modes de réalisation différents, être supérieur ou inférieur. De même, ces branches peuvent avoir des formes et tailles différentes, notamment en fonction des dimensions ou de la physionomie de la plaque.

De sa sous-face font saillies deux séries distinctes de plots taraudés 100 et 600, les plots 100 étant disposés selon une répartition triangulaire à l'intérieur des branches radiales 10. Leur hauteur est sensiblement la même que celle de la paroi 62.

La sous-face présente une gorge radiale 601 dont la fonction est de recevoir une sonde de température non représentée.

La coiffe est destinée à recevoir des pièces ou platines 7 de transfert du mélange gaz/air de l'intérieur du dispositif vers l'extérieur.

Une de ces platines est visible à la figure 7.

Cinq platines du même type sont destinées à venir se plaquer contre les branches radiales 10 précitées. Ces platines ont un contour analogue à la forme des branches 10. Elles présentent un corps 70 et une tête 71. Par superposition des platines 7 et de la paroi 62, on obtient un boîtier 1 analogue à celui décrit plus haut.

L'ensemble de la périphérie des platines présente une série d'ondulations 73 qui délimitent des orifices où se forment les flammes.

Une série de perforations 74 est prévue de manière à se superposer aux plots taraudés précités et permettre leur fixation. Des sections latérales embouties 72 rigidifient les platines.

Dans un autre mode de réalisation, les platines peuvent être strictement planes et démunies d'ondulations. Dans ce cas, une pièce intermédiaire de faible épaisseur, présentent une série de créneaux, est placée en sandwich entre la paroi 62 et les platines 7.

Bien que plaquées contre les branches 10, les platines 7 maintiennent en place un tube Venturi central 8. Ce tube vient en remplacement du puits central 3 décrit précédemment.

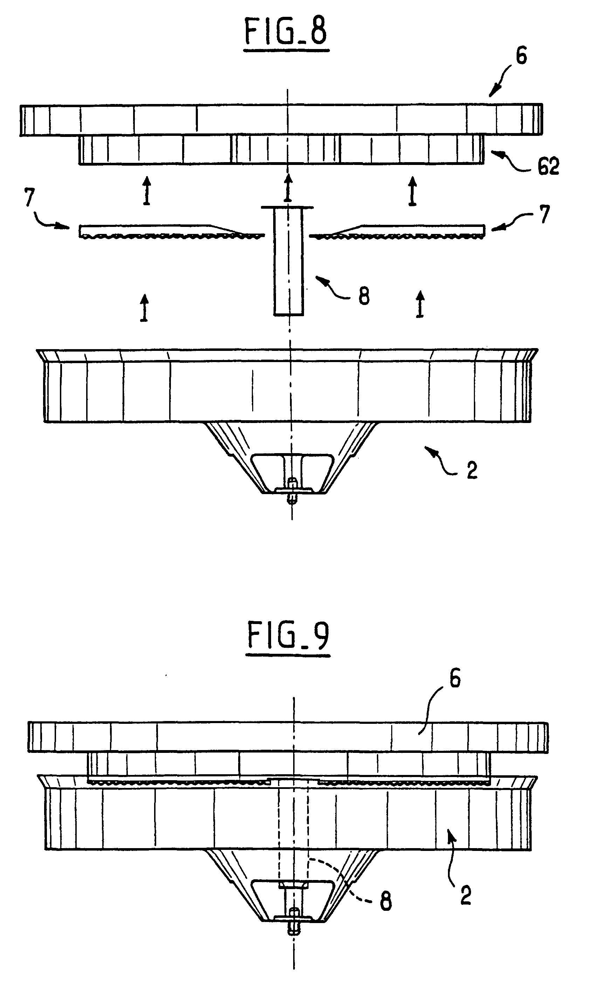

Le corps inférieur 2 présenté aux figures 8 et 9 constitue une chambre qui sert à éviter que le rayonnement de la chaleur se fasse vers le bas.

Sur la partie inférieure emboutie de ce corps est disposé un injecteur de gaz. Il pourrait être disposé directement en extrémité basse du tube Venturi 8.

Cette structure de corps inférieur 2 peut, dans un mode de réalisation différent, équiper un appareil tel que celui décrit en référence à la figure 2.

## Revendications

1. Appareil à gaz pour le chauffage et/ou la cuisson d'aliments, comportant un boîtier (1) comprenant un corps inférieur (2) dans lequel est reçu un mélange gaz/air (G+A) à brûler, et une coiffe supérieure (6) en forme de plaque (60) destinée à venir reposer sur ledit corps (2), des orifices (42) étant prévus dans ce boîtier (1) pour l'échappement et la combustion dudit mélange gaz/air (G+A), que la face supérieure de ladite plaque (60) constitue une surface de réception des aliments à chauffer et/ou à cuire, **caractérisé par le fait que** le boîtier (1) présente un contour sinueux avec des branches radiales (10), agencées de telle manière que l'échappement et la combustion dudit mélange gaz/air (G+A) se fasse dans des régions centrales (11), périphériques (13) et radiales (12) de la sous-face de la coiffe (6).

2. Appareil selon la revendication 1, **caractérisé par le fait que** sur la sous-face de la coiffe (6) fait saillie une paroi (62) à contour fermé et sinueux, qui prend appui sur un muret (41) de même contour que présente le corps inférieur (2), cette paroi (62) et ce muret (41) délimitant latéralement ledit boîtier (1).

3. Appareil selon la revendication 1, **caractérisé par le fait que** la sous-face de ladite coiffe prend appui directement sur un muret (41) à contour fermé et sinueux que présente le corps inférieur (2).

4. Appareil selon l'une des revendications 1 à 3, **caractérisé par le fait que** ladite plaque est une plaque de crêpière (60).

5. Appareil selon l'une des revendications 1 à 3, **caractérisé par le fait que** ladite plaque est une plaque de grill, nervurée ou non.

6. Appareil selon l'une des revendications 1 à 5, **caractérisé par le fait que** lesdits orifices d'échappement (42) s'étendent à proximité du plan de jonction du corps inférieur (2) et de ladite coiffe (6).

7. Appareil selon la revendication 6, **caractérisé par le fait que** lesdits orifices (42) consistent en une série de créneaux formés dans le bord supérieur dudit muret (41), dont l'ouverture supérieure est obturée par ladite coiffe (6).

8. Appareil selon la revendication 6, **caractérisé par le fait que** lesdits orifices (42) consistent en une série de créneaux formés dans le bord inférieur de ladite paroi (62), ou dans le corps de celle-ci.

9. Appareil selon la revendication 6, **caractérisé par le fait que** lesdits orifices (42) consistent en une série de créneaux formés dans une pièce intermédiaire, apte à s'intercaler entre ladite paroi (62) et ledit muret (41).

10. Appareil selon l'une des revendications 1 à 9, **caractérisé par le fait que** le contour dudit boîtier (1) présente une forme semblable à celle d'une étoile.

## Patentansprüche

1. Gasgerät zum Wärmen und/oder Kochen von Lebensmitteln mit einem Gehäuse (1), das einen unteren Körper (2) umfasst, in welchem ein zu verbrennendes Gas/Luft-Gemisch (G + A) aufgenommen wird, und einen oberen Deckel (6) in Form einer Platte (60), die dafür bestimmt ist, sich auf den Körper (2) aufzulegen, wobei Öffnungen (42) in diesem Gehäuse (1) zum Ableiten und zur Verbrennung des Gas/Luft-Gemisches (G + A) vorgesehen sind, **dadurch gekennzeichnet, dass** die Oberseite der Platte (60) eine Aufnahmefläche für die zu wärmenden und/oder zu kochenden Lebensmittel bildet, und dass das Gehäuse (1) einen kurvigen Umriss mit radialen Abzweigungen (10) aufweist, die derart angeordnet sind, dass das Entweichen und Verbrennen des Gas/Luft-Gemisches (G + A) in den mittleren (11), Umfangs- (13) und radialen Bereichen (12) der Unterseite des Deckels (6) stattfindet.

2. Gerät gemäß Anspruch 1, **dadurch gekennzeichnet, dass** auf der Unterseite des Deckels (6) eine Wand (62) mit geschlossenem und kurvigem Umriss vorspringt, die sich auf eine niedrige Wand (41) mit demselben Umriss auflegt, welche der untere Körper (2) aufweist, wobei diese Wand (62) und diese niedrige Wand (41) seitlich das Gehäuse (1) begrenzen.

3. Gerät gemäß Anspruch 1, **dadurch gekennzeichnet, dass** sich die Unterseite des Deckels direkt auf eine niedrige Wand (41) mit geschlossenem und kurvigem Umriss, welche der untere Körper (2) aufweist, auflegt.

4. Gerät gemäß einem der Ansprüche 1 bis 3, **dadurch gekennzeichnet, dass** die Platte aus einer Crêpepfannenplatte (60) besteht.

5. Gerät gemäß einem der Ansprüche 1 bis 3, **dadurch gekennzeichnet, dass** die Platte aus einer gerippten oder nicht gerippten Grillplatte besteht.

6. Gerät gemäß einem der Ansprüche 1 bis 5, **dadurch gekennzeichnet, dass** sich die Ableitungsöffnungen (42) in der Nähe der Verbindungsebene des unteren Körpers (2) und des Deckels (6) erstrecken.

7. Gerät gemäß Anspruch 6, **dadurch gekennzeichnet, dass** die Öffnungen (42) aus einer Reihe schlitzförmiger Lücken bestehen, die in der Oberkante der niedrigen Wand (41) ausgebildet sind, deren obere Öffnung durch den Deckel (6) verschlossen ist.

8. Gerät gemäß Anspruch 6, **dadurch gekennzeichnet, dass** die Öffnungen (42) aus einer Reihe schlitzförmiger Lücken bestehen, die in der Unterkante der Wand (62) oder in deren Körper ausgebildet sind.

9. Gerät gemäß Anspruch 6, **dadurch gekennzeichnet, dass** die Öffnungen (42) aus einer Reihe schlitzförmiger Lücken bestehen, die in einem Zwischenstück ausgebildet sind, das in der Lage ist, sich zwischen der Wand (62) und der niedrigen Wand (41) festzuklemmen.

10. Gerät gemäß einem der Ansprüche 1 bis 9, **dadurch gekennzeichnet, dass** der Umriss des Gehäuses (1) eine stemenähnliche Form aufweist.

## Claims

1. A gas appliance for heating and/or cooking food, the appliance comprising a housing (1) comprising a bottom body (2) in which a gas/air mixture (G+A) for burning is received, and a top cover (6) in the form of a plate (60) for resting on said body (2), orifices (42) being provided in said housing (1) to allow said gas/air mixture (G+A) to escape and bum, the appliance being **characterized by** the fact that the top face of said plate (60) constitutes a surface for receiving food to be heated and/or cooked, and that the housing (1) presents an outline that is sinuous with radial branches (10) arranged in such a manner that said gas/air mixture (G+A) escapes and bums in regions of the under-face of the cover (6) that are central (11), peripheral (13), and radial (12).

2. An appliance according to claim 1, **characterized by** the fact that a wall (62) of closed and sinuous outline projects from the under-face of the cover (6), said wall bearing against a ridge (41) having the same outline and presented by the bottom body (2), the wall (62) and the ridge (41) defining the sides of said housing (1).

3. An appliance according to claim 1, **characterized by** the fact that the under-face of said cover bears directly against a ridge (41) of dosed and sinuous outline presented by the bottom body (2).

4. An appliance according to any one of claims 1 to 3, **characterized by** the fact that said plate is a plate (60) for making pancakes.

5. An appliance according to any one of claims 1 to 3, **characterized by** the fact that said plate is a plate of a grill, optionally having ribs.

6. An appliance according to any one of claims 1 to 5, **characterized by** the fact that said exhaust orifices (42) extend close to the junction plane between the bottom body (2) and said cover (6).

7. An appliance according to claim 6, **characterized by** the fact that said orifices (42) constitute a series of crenellations formed in the top edge of said ridge (41), the open tops of the crenellations being closed by said cover (6).

8. An appliance according to claim 6, **characterized by** the fact that said orifices (42) constitute a series of crenellations formed in the bottom edge of said wall (62) or in the body thereof.

9. An appliance according to claim 6, **characterized by** the fact that said orifices (42) constitute a series of crenellations formed in an intermediate piece, suitable for being interposed between said wall (62) and said ridge (41).

10. An appliance according to any one of claims 1 to 9, **characterized by** the fact that the outline of said housing (1) is similar in shape to the outline of a star.
